# EUROPÄISCHE PATENTANMELDUNG

(11) **EP 1 479 293 A1**
(43) Veröffentlichungstag der Anmeldung: **24.11.2004**
(21) Anmeldenummer: 04010737.7
(22) Anmeldetag: 06.05.2004
(51) Int. Cl.: A01M 7/00, B05B 15/06

(54) **Sprühventil**

(30) Priorität: 19.05.2003 DE 10323598
(71) Anmelder: Lechler GmbH, 72555 Metzingen (DE)
(72) Erfinder: Göbel, Bernd, Dr., 71686 Remseck (DE); Schenk, Thomas, 72622 Nürtingen (DE); Gomes-Alves, Joaquim, 72764 Reutlingen (DE)
(74) Vertreter: Patentanwälte Ruff, Wilhelm, Beier, Dauster & Partner

(57) **Zusammenfassung**

Beschrieben wird ein Sprühventil für landwirtschaftliche Zwecke, das mit zwei unter einem Winkel (α) zueinander geneigten Flachstrahldüsen (3) versehen ist. Das Sprühventil besteht aus einer Haltekappe (2) für die Flachstrahldüsen und aus einem Verteilkopf (1) für das zu versprühende Medium. Die Haltekappe nimmt die Flachstrahldüse (3) auswechselbar auf und ist über eine Federklammer (4) am Verteilkopf (1) gesichert. Mit dem Doppelsprühventil können Pflanzenbestände aus unterschiedlichen Richtungen besprüht und gegen Krankheiten geschützt werden.

## Beschreibung

Die Erfindung betrifft ein Sprühventil, insbesondere ein Doppelsprühventil für landwirtschaftliche Zwecke, mit an einer gemeinsamen Sprühmittelzuleitung angeschlossenen Sprühdüsen, die auswechselbar mit Hilfe von Schnellbefestigungs-Haltekappen am Ventilkörper angebracht sind.

Sprühventile dieser Art sind beispielsweise aus der WO 02/087779 A1 bekannt, wo die einzelnen Sprühdüsen mit Befestigungskappen, die mit einem Bajonettverschluss versehen sind, an den zugeordneten Anschlussstutzen des Ventils angesetzt werden können.

Es sind auch Sprühventile mit rotierenden Sprühdüsen bekannt (US 5 125 578 A), wobei auch hier die an einem rotierenden Träger angeordneten Sprühdüsen als Einsatzteile mit Hilfe von Schraubkappen auf den entsprechenden Ansätzen des Trägers befestigbar sind.

Für das Ausbringen von Pflanzenschutzmitteln speziell bei der Bekämpfung von Pilzkrankheiten und der Vermeidung von Mycotoxinen an der Fruchtständen, z.B. Ähren bei Weizen, ist es notwendig, das Pflanzenschutzmittel nicht nur von oben, sondern seitlich von vorne und hinten aufzubringen, weil dadurch eine Bekämpfung solcher Pilzkrankheiten gewährleistet wird und auch die Wirkung erheblich erhöht werden kann.

In der Regel wird das Ausbringen von Pflanzenschutzmitteln mit Hilfe von Flachstrahldüsen vorgenommen. Durch immer höhere Umwelt-Auflagen im Pflanzenschutz wird es notwendig, die Düsen mehr und mehr komplexer zu gestalten. Dazu kommt auch, dass Doppelsprühventile mit zwei Flachstrahldüsen, die auch in der Lage sind, zwei Sprühfächer auszubilden, wegen ihrer Tropfenfeinheit und der damit verbundenen Sprühmittelabdrift nicht mehr eingesetzt werden dürfen. Dazu kommt, dass der Krankheitsbefall in Getreidebeständen immer weiter resistenter gegen die eingesetzten Pflanzenschutzmittel wird, so dass nach Möglichkeiten gesucht wird, eine höhere Wirksamkeit zu erzielen.

Der vorliegenden Erfindung liegt daher die Aufgabe zugrunde, ein Sprühventil, insbesondere ein Doppelsprühventil, für landwirtschaftliche Zwecke zu schaffen, das zum einen sehr einfach bedienbar ist, das aber auch die Möglichkeit gibt, mit grobtropfigen, abdriftarmen Düsen eine optimale Ährenbehandlung durchzuführen.

Zur Lösung dieser Aufgabe wird bei einem Sprühventil der eingangs genannten Art vorgesehen, dass eine Haltekappe mit mindestens zwei im Winkel zueinander verlaufenden Aufnahmeführungen zum Einsetzen der Sprühdüsen vorgesehen ist und dass die Sprühmittelzuleitung in einen der Haltekappe vorgeschalteten Verteilkopf mündet, der mit Anschlussöffnungen für die Sprühdüsen versehen ist, deren Anschlussebenen unter dem gleichen Winkel wie die Aufnahmeführungen der Haltekappe geneigt zueinander angeordnet und fluchtend zu diesen ausgerichtet sind.

Durch diese Ausgestaltung nämlich wird es möglich, zwei Sprühstrahlen mit dem Pflanzenschutzmittel aus verschiedenen Winkeln auf die Fruchtähren aufzubringen, ohne dass umständliche Einstellungen der Sprühdüsen oder ein zweiter Arbeitsvorgang notwendig werden.

In Ausgestaltung der Erfindung können die Haltekappen verdrehsicher am Ventilkopf angesetzt und durch eine Steckklammer gesichert werden, so dass ein äußerst einfacher Aufbau und eine einfache Montage der Sprühdüsen möglich ist. Ohne großen Aufwand können Sprühdüsen ausgewechselt werden und zwar ohne Zuhilfenahme von Werkzeugen und ohne die Gefahr, dass beispielsweise Schraubgewinde durch den rauen Einsatz im Gelände verschmutzt oder auf sonstige Weise nicht mehr einfach betätigbar sind. Die U-förmige Steckklammer lässt sich stets einfach in entsprechende Führungen der Haltekappe einsetzen und hält dann formschlüssig in entsprechend angeordneten Nuten des Verteilkopfes.

In weiterer Ausgestaltung der Erfindung können die Sprühdüsen unter einem Winkel von je 30° zu einer Mittelebene der Haltekappe und des Verteilkopfes geneigt angeordnet sein. Es hat sich gezeigt, dass bei einem Auftreffen der Sprühstrahlen jeweils im Winkel von 30° von vorne und hinten im Bestand eine ausgezeichnete Wirkung des Pflanzenschutzmittels erreicht werden kann. Die Sprühdüsen können dabei als Flachstrahldüsen ausgebildet und verdrehsicher in der Haltekappe so geführt sein, dass die Flachstrahlen mit ihren Strahlebenen unter dem vorbestimmten Winkel abgegeben werden.

In einfacher Ausgestaltung der Erfindung können die Sprühdüsen über gesonderte Anschlussstutzen in der Haltekappe angeordnet werden, die im montierten Zustand über Dichtringe an den Anschlussöffnungen des Verteilkopfes anliegen. Die Anschlussstutzen selbst können unverdrehbar in den Führungen der Haltekappe und die Sprühdüsen wiederum unverdrehbar an den Anschlussstutzen gehalten sein, so dass nach dem Einführen von Sprühdüsen, Anschlussstutzen und Dichtringen in die Haltekappe und nach deren Verbindung mit dem Verteilkopf die jeweils erforderlichen Sprühstrahlen zur Bekämpfung der Krankheiten an den Fruchtständen eingesetzt werden können.

Die Erfindung ist anhand eines Ausführungsbeispieles in der Zeichnung dargestellt und wird im folgenden erläutert. Es zeigen:
- Fig. 1: eine perspektivische Ansicht eines neuen Sprühventils im vollständig montierten Zustand und
- Fig. 2: eine Explosionsdarstellung des Sprühventils nach Fig. 1 mit den einzelnen zusammenzusteckenden Teilen.

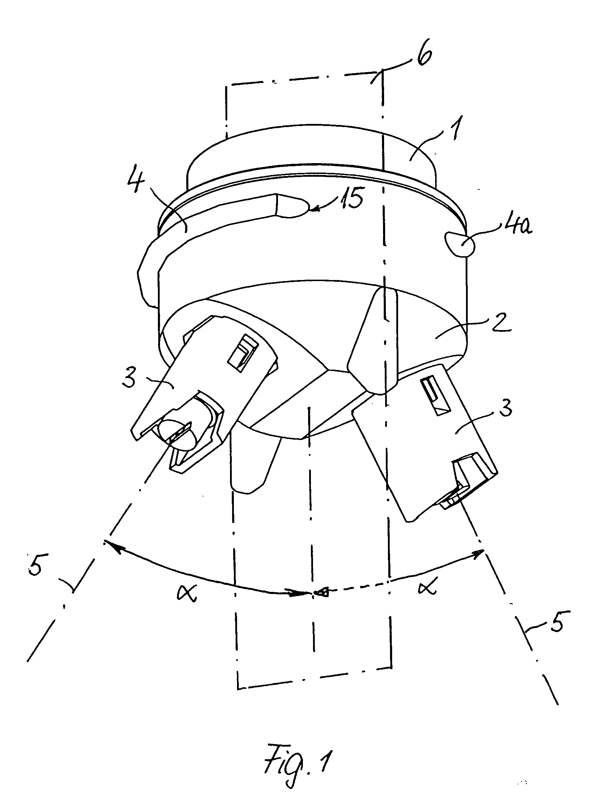

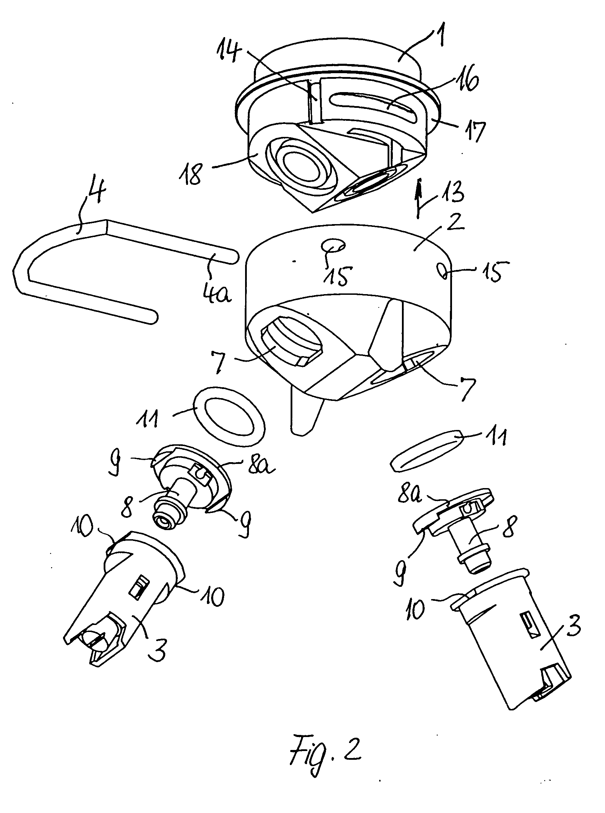

Die Fig. 1 zeigt das neue Doppelsprühventil, das aus einem Verteilkopf 1, einer Haltekappe 2 und aus zwei Flachstrahldüsen 3 besteht, die fest, aber auswechselbar, in die Haltekappe 2 eingesetzt sind. Die Haltekappe 2 wiederum ist, wie im einzelnen noch anhand der Fig. 2 beschrieben werden wird, außen auf den Verteilkopf 1 aufgeschoben und in dieser Lage durch eine Steckklammer 4 gesichert, die mit ihren Schenkeln 4a in Öffnungen 5 der Haltekappe eingeschoben und in dieser Lage elastisch gehalten ist. Die Steckklammer 4 besteht zweckmäßig aus Metall mit entsprechenden Federeigenschaften.

Die Fig. 1 zeigt auch, dass die beiden Flachstrahldüsen 3 mit ihren Strahlachsen 5 jeweils um einen Winkel α zu einer Mittelebene 6 der Haltekappe geneigt angeordnet sind, die auch eine Symmetrieebene für die Haltekappe 2 bildet.

Die Fig. 2 macht deutlich, dass in der Haltekappe 2 Aufnahmeführungen 7 jeweils für die Flachstrahldüsen 3 vorgesehen sind, die ebenfalls unter dem Winkel α gegenüber der vorher erwähnten Mittelebene 6 geneigt sind. Die Flachstrahlsprühdüsen 3 werden dabei von der Innenseite der Haltekappe 2 her in die Aufnahmeführungen eingeschoben und liegen wegen der entsprechenden Ausbildung der Aufnahmeführungen 7 und der ihnen zugeordneten Anschlussstutzen 8 unverdrehbar in der Haltekappe 2, wenn diese nach Fig. 1 montiert ist und zwar so, dass ihre Sprühfächer jeweils in Ebenen liegen, die um den Winkel α gegenüber der Mittelebene 6 versetzt sind.

Die Anschlussstutzen 8 ragen zum einen in das Innere der Flachstrahldüsen 3 herein, liegen mit seitlichen Anschlägen 9 an entsprechenden Abflachungen 10 der Flachstrahldüsen 3 an und sind selbst unverdrehbar in den Aufnahmeführungen 7 gehalten. Über jeweils einen Dichtring 11 sind die Flanschteile 8a der Anschlussstutzen 8 dicht an Anschlussöffnungen 12 des Verteilkopfes 1 angesetzt, wenn der Zustand nach Fig. 1 vorliegt. Die Anschlussöffnungen 12 liegen dabei in Ebenen 18, die gegenüber einer senkrecht zu der Mittelebene 6 stehenden Ebene um den gleichen Winkel α geneigt sind wie die Sprühachsen 5 der Sprühventile 3 zu jener Mittelebene 6. Dieser Winkel beträgt beim Ausführungsbeispiel α = 30°. Die Ausgestaltung ist dabei so getroffen, dass die Anschlussöffnungen 12 fluchtend zu den Aufnahmeführungen 7 ausgebildet sind. Der Verteilkopf 1 selbst wird in nicht näher dargestellter Weise, beispielsweise über einen Bajonettverschluss an eine gemeinsame Sprühmittelzuleitung angeschlossen, die beispielsweise, wie in der WO 02/087779 A1 gezeigt ist, in einem von einem Traktor quer zur Fahrtrichtung bewegten Rohrabschnitt verlegt ist. Der Verteilkopf 1 weist in der Montagerichtung 13 für die Haltekappe 2 verlaufende Vertiefungen 14 auf, in die in der Fig. 2 nicht sichtbaren Vorsprünge der Haltekappe eingreifen, um eine Verdrehung von Verteilkopf und Haltekappe 2 gegeneinander zu verhindern. Die Schenkel 4a der Steckklammer 4 greifen durch die Führungsöffnungen 15 der Haltekappe im montierten Zustand hindurch und in Nuten 16 ein, die quer zur Montagerichtung 13 unterhalb eines Anschlagringes 17 des Verteilkopfes 1 verlaufen und sichern so auf einfache Weise die Haltekappe 2 am Verteilkopf 1. Dichtringe 11, Anschlussstutzen 8 und Flachstrahlventile 3 sind vorher in die Haltekappe 2 eingesetzt worden, so dass Sprühmittel vom Verteilkopf 1 aus über die beiden zueinander geneigten Flachstrahldüsen 3 nach außen abgegeben werden kann.

Diese Ausgestaltung bietet den Vorteil, dass Flachstrahlen mit Pflanzenbehandlungsmitteln von vorne und von hinten auf das zu behandelnde Gut auftreffen können, wenn die Sprühdüsen in bekannter Weise an den Pflanzen vorbeigeführt werden. Die Düsen 3 können dabei in relativ einfacher Weise ausgewechselt werden, wenn andere Voraussetzungen für die Sprühstrahlen vorliegen sollen, beispielsweise bedingt durch anderes Sprühmittel oder dergleichen. Es braucht lediglich ohne die Zuhilfenahme von Werkzeugen die Steckklammer 4 gelöst werden, so dass dann die Haltekappe 2 vom Verteilkopf 1 abgenommen werden kann und der Austausch der Sprühventile möglich wird.

## Patentansprüche

1. Sprühventil, insbesondere Doppelsprühventil für landwirtschaftliche Zwecke, mit an einer gemeinsamen Sprühmittelzuleitung angeschlossenen Sprühdüsen (3), die auswechselbar mit Hilfe von Schnellbefestigungs-Haltekappen (2) am Ventilkörper angebracht sind, **dadurch gekennzeichnet, dass** eine Haltekappe (2) mit mindestens zwei im Winkel (α) zueinander verlaufenden Aufnahmeführungen (7) zum Einsetzen der Sprühdüsen (3) vorgesehen ist, und dass die Sprühmittelzuleitung in einen der Haltekappe (2) vorgeschalteten Verteilkopf (1) mündet, der mit Anschlussöffnungen (12) für die Sprühdüsen (3) versehen ist, deren Anschlussebenen (18) unter dem gleichen Winkel (α) wie die Aufnahmeführungen (7) der Haltekappe (2) geneigt zueinander angeordnet und fluchtend zu diesen ausgerichtet sind.

2. Sprühventil nach Anspruch 1, **dadurch gekennzeichnet, dass** die Haltekappen 82) verdrehsicher am Verteilkopf (1) angesetzt und durch eine Steckklammer (4) gesichert sind.

3. Sprühventil nach Anspruch 2, **dadurch gekennzeichnet, dass** die Steckklammer (4) in Führungen (15) der Haltekappe (2) und in Nuten (16) des Verteilkopfes (1) geführt ist.

4. Sprühventil nach Anspruch 1, **dadurch gekennzeichnet, dass** die Sprühdüsen (3) unter einem Winkel von je 30° zu einer Mittelebene (6) der Haltekappe (2) und des Verteilkopfes (1) geneigt sind.

5. Sprühventil nach Anspruch 1, **dadurch gekennzeichnet, dass** die Sprühdüsen als Flachstrahldüsen (3) ausgebildet und verdrehsicher in der Haltekappe (2) so geführt sind, dass die Flachstrahlen mit ihren Strahlebenen unter dem vorbestimmten Winkel (α) abgegeben werden.

6. Sprühventil nach Anspruch 1, **dadurch gekennzeichnet, dass** die Sprühdüsen (3) über gesonderte Anschlussstutzen (8) in der Haltekappe (2) angeordnet sind, die im montierten Zustand über Dichtringe (11) an den Anschlussöffnungen (12) des Verteilkopfes 81) anliegen.

7. Sprühventil nach Anspruch 6, **dadurch gekennzeichnet, dass** die Anschlussstutzen (8) unverdrehbar in den Führungen (7) der Haltekappe (2) und die Sprühdüsen (3) unverdrehbar an den Anschlussstutzen gehalten sind.
